# EUROPÄISCHE PATENTANMELDUNG

(11) **EP 0 914 012 A2**
(43) Veröffentlichungstag der Anmeldung: **06.05.1999**
(21) Anmeldenummer: 98440230.5
(22) Anmeldetag: 23.10.1998
(51) Int. Cl.: H04Q 3/52, H04N 7/173

(54) **Vorrichtung zum Zusammenführen und Verstärken von zwei breitbandigen Signalen**

(30) Priorität: 28.10.1997 DE 19747447
(71) Anmelder: ALCATEL, 75008 Paris (FR)
(72) Erfinder: Steigenberger, Ulrich, 70565 Stuttgart (DE); Hägele, Volker, Dr., 73635 Rudersberg (DE)
(74) Vertreter: Menzietti, Domenico, Dipl.-Ing

(57) **Zusammenfassung**

Die Erfindung bezieht sich auf eine Vorrichtung ( VOR ) zum Zusammenführen und Verstärken von zwei breitbandigen Signalen, die aus verschiedenen Übertragungsnetzen ( NET1, NET2 ) empfangen werden und in frequenzmäßig voneinander getrennten Übertragungskanälen übertragen werden. Die Vorrichtung ( VOR ) beinhaltet einen Breitbandverstärker ( BV ) und ist insbesondere dadurch gekennzeichnet, daß sie einen Vorverstärker ( VV ) und eine Frequenzweiche ( FW ) aufweist, die vorab eine Aufbereitung der zu verstärkenden Signale durchführen und ein optimiertes Signal-zu-Rausch Verhältnis zwischen den beiden zusammengfaßten breitbandigen Signalen bewirken, indem einerseits durch den Vorverstärker der Signalpegel des einen Signals an den Signalpegel des anderen Signals angepaßt wird, z.B. auf den gleichen Wert, wodurch eine linearere und erhöhte Verstärkung im Breitbandverstärker erzielt wird und andererseits durch die Filterung der Signale in der Frequenzweiche verhindert wird, daß beim Zusammenfassen der Signale Störsignale, z.B. Rauschen, die in dem einen Signal enthalten sind, in den belegten Frequenzbereich des anderen Signals gelangen und umgekehrt.

## Beschreibung

Die Erfindung bezieht sich auf eine Vorrichtung zum Zusammenführen und Verstärken von zwei breitbandigen Signalen gemäß dem Oberbegriff des Patentanspruchs 1.

Aus DE 44 36 818 ist eine Vorrichtung zum Zusammenführen und Verstärken von zwei breitbandigen Signalen bekannt. Das eine breitbandige Signal beinhaltet analoge Kabelfernsehsignale, die in einem Koaxialkabelnetz übertragen werden. Das andere breitbandige Signal beinhaltet digitale bidirektionale Signale, die in einem optischen Lichtwellenleiternetz übertragen werden, das zusätzlich zum bestehenden Koaxialkabelnetz installiert werden soll. In der Vorrichtung werden die empfangenen Kabelfernsehsignale in einem unidirektionalem Verstärker verstärkt; die empfangenen digitalen bidirektionalen Signale werden nach einer optisch/elektrischen Umsetzung in einem bidirektionalen Verstärker verstärkt. Die verstärkten Kabelfernsehsignale und die verstärkten bidirektionalen Signale werden anschließend mittels einer Ein-/Auskoppelvorrichtung zusammengeführt. Kabelfernsehsignale und bidirektionale Signale werden in unterschiedlichen Frequenzbereichen übertragen, so daß die Ein-/Auskoppelvorrichtung mit frequenzselektiven Weichen ausgebildet sein kann. In der Vorrichtung sind somit zwei Verstärker notwendig, die zusammen eine hohe Verlustleistung haben. Die Vorrichtung wird im bestehenden Kabelfernsehnetz ferngespeist mit einer im Wert limitierten Leistung, so daß eine durch den zusätzlichen bidirektionalen Verstärker erhöhte Verlustleistung nachteilig ist und unter Umständen eine neues Fernspeisungskonzept erfordert.

Aus DE 195 05 578 ist ein optisches Übertragungssystem für Kabelfernsehsignale und Video- und Telekommunikationssignale bekannt. Die Kabelfernsehsignale werden in einem ersten optischen Übertragungsnetz von einer Zentrale zu einer Netzabschlußeinrichtung übertragen. Die Video- und Telekommunikationssignale werden in einem zweiten optischen Übertragungsnetz von der Zentrale zur Netzabschlußeinrichtung übertragen. In der Netzabschlußeinrichtung werden die Kabelfernsehsignale und die Videosignale nach ihrer getrennten optisch/elektrischen Umsetzung ungedämpft einem Breitbandverstärker zugeführt und zusammen verstärkt. Die Telekommunikationssignale werden zunächst zusammen mit den Videosignale optisch/elektrisch umgesetzt, anschließend von den Videosignalen getrennt, gedämpft und in einem Schmalbandverstärker verstärkt. Kabelfernsehsignale, Videosignale und Telekommunikationssignale werden in unterschiedlichen Frequenzbereichen übertragen. Die gemeinsame Verstärkung von Kabelfernsehsignalen und Videosignalen erspart zwar einen Verstärker, doch kommen die beiden Signale aus unterschiedlichen Netzen, was beim Zusammenführen zu wechselseitigen Störungen führen kann.

Eine Aufgabe der Erfindung ist daher, eine Vorrichtung zu schaffen, die geeignet ist, zwei breitbandige Signale, die aus verschiedenen Übertragungsnetzen empfangen werden und in frequenzmäßig voneinander getrennten Übertragungskanälen übertragen werden, in optimierter Weise zusammenzufassen und zu verstärken.

Gelöst wird diese Aufgabe durch die Vorrichtung gemäß Patentanspruch 1. Insbesondere ist die Vorrichtung dadurch gekennzeichnet, daß sie einen Vorverstärker und eine Frequenzweiche aufweist, die vorab eine Aufbereitung der zu verstärkenden Signale durchführen und ein optimiertes Signal-zu-Rausch Verhältnis zwischen den beiden zusammengfaßten breitbandigen Signalen bewirken, indem einerseits durch den Vorverstärker der Signalpegel des einen Signals an den Signalpegel des anderen Signals angepaßt wird, z.B. auf den gleichen Wert, wodurch eine linearere und erhöhte Verstärkung im Breitbandverstärker erzielt wird und andererseits durch die Filterung der Signal in der Frequenzweiche verhindert wird, daß beim Zusammenfassen der Signale Störsignale, z.B. Rauschen, die in dem einen Signal enthalten sind, in den belegten Frequenzbereich des anderen Signals gelangen und umgekehrt.

Vorteilhafte Ausgestaltungen der Erfindung sind den abhängigen Ansprüchen zu entnehmen.

Im folgenden wird die Erfindung anhand von drei Ausführungsbeispielen unter Zuhilfenahme der Figuren 1 bis 3 erläutert. Es zeigen :
- Fig. 1: eine schematische Darstellung eines ersten Ausführungsbeispiels einer erfindungsgemäßen Vorrichtung und ihrer Anbindung an zwei Übertragungsnetze,
- Fig. 2: eine schematische Darstellung eines zweiten Ausführungsbeispiels einer erfindungsgemäßen Vorrichtung und
- Fig. 3: eine schematische Darstellung eines dritten Ausführungsbeispiels einer erfindungsgemäßen Vorrichtung.

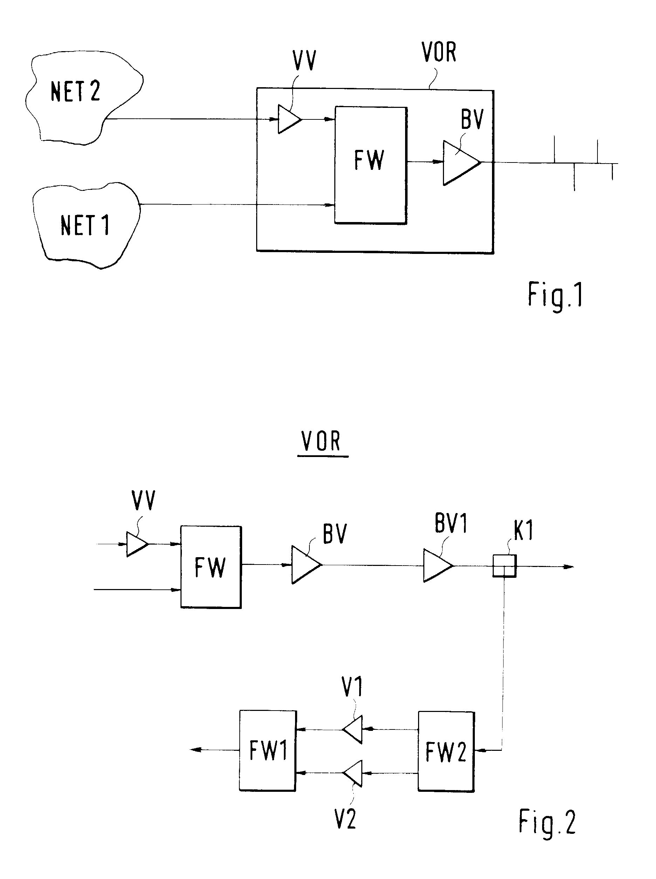

Das erste Ausführungsbeispiel wird nun unter Zuhilfenahme von Fig. 1 beschrieben. Fig. 1 zeigt eine erfindungsgemäße Vorrichtung VOR und zwei Übertragungsnetze NET1 und NET2. Das Übertragungsnetz NET1 ist ein Netz zum Übertragen von breitbandigen Signalen, beispielsweise von analogen Kabelfernsehsignalen. Die Kabelfernsehsignale werden in einem Frequenzbereich von 80 MHz bis 450 MHz übertragen. Die Übertragung erfolgt auf elektrischem Wege über Koaxialkabel oder optisch über Glasfaserkabel. Die Struktur des Übertragung netzes NET1 entspricht beispielsweise der eines Baumnetzes. Die Kabelfernsehsignale werden dann von einer Zentrale über ein verzweigtes Koaxialkabel- oder Glasfasernetz an eine Vielzahl von Endstellen verteilt. In gewissen Abständen müssen die Kabelfernsehsignale verstärkt werden; dazu sind elektrische bzw. optische Verstärker in den Signalpfad eingeschleift. Ein Teil der Kabelfernsehsignale wird zur Vorrichtung VOR weitergeleitet. Für den Fall, daß die Kabelfernsehsignale der Vorrichtung VOR optisch zugeführt werden, ist in der Vorrichtung VOR ein Optisch/Elektrisch-Umsetzer vorgesehen, um die Kabelfernsehsignale vor ihrer weiteren Verarbeitung in elektrische Signale umzusetzen. Für den Fall, daß die Kabelfernsehsignale der Vorrichtung VOR elektrisch zugeführt werden, ist in der Vorrichtung VOR eine Fernspeiseweiche vorgesehen, die die über die Koaxialkabel übertragene Fernspeisung auskoppelt und die Vorrichtung auf diese Weise mit einer im Betrag limitierten Leistung versorgt.

Das Übertragungsnetz NET2 ist ein Netz zum Übertragen von breitbandigen Signalen, beispielsweise von analogen und/oder digitalen Kabelfernsehsignalen und/oder digitalen Videosignalen. Die Kabelfernsehsignale und/oder Videosignale werden in einem Frequenzbereich von 470 MHz bis 860 MHz übertragen. Die Übertragung erfolgt optisch über Glasfaserkabel. Die Struktur des Übertragungnetzes NET1 entspricht beispielsweise der eines Baumnetzes. Die Kabelfernsehsignale und/oder Videosignale werden dann von einer Zentrale über ein mittels optischen Splittern verzweigtes Glasfasernetz zu einer Vielzahl von Endstellen übertragen. In gewissen Abständen müssen die Kabelfernsehsignale und/oder Videosignale verstärkt werden; dazu sind optische Verstärker in den Signalpfad eingeschleift. Ein Teil der Kabelfernsehsignale und/oder Videosignale wird zur Vorrichtung VOR weitergeleitet. In der Vorrichtung VOR ist ein Optisch/Elektrisch-Umsetzer vorgesehen, um die Kabelfernsehsignale und/oder Videosignale vor ihrer weiteren Verarbeitung in elektrische Signale umzusetzen.

Die Vorrichtung VOR hat die Aufgabe die beiden breitbandigen Signale, die in frequenzmäßig voneinander getrennten Übertragungskanälen in den Übertragungsnetzen NET1 und NET2 übertragen werden, zusammenzuführen und zu verstärken. Die Vorrichtung VOR beinhaltet dazu eine Frequenzweiche FW, einen Breitbandverstärker BV und einen Vorverstärker VV, der die breitbandigen Signale aus dem Übertragungsnetz NET2 nach ihrer optisch/elektrischen Umsetzung derart verstärkt, daß das Verhältnis des Signalpegels des aus Übertragungsnetz NET2 empfangenen breitbandigen Signals zum Signalpegel des aus Übertragungsnetz NET1 empfangenen breitbandigen Signals einen vorgegebenen Wert einnimmt. Der Signalpegel des breitbandigen Signals aus Übertragungsnetz NET1 beträgt beispielsweise 76 dB. Der Signalpegel des breitbandigen Signals aus Übertragungsnetz NET2 wird durch den Vorverstärker VV beispielsweise ebenfalls auf den Wert 76 dB eingestellt. Dadurch werden die Signalpegel der beiden empfangenen Signale aneinander angelichen, was vorteilhafte Auswirkungen auf die nachfolgende Verstärkung hat, da zwei Signale mit gleichem Signalpegel bei einer über der Frequenz konstanten Verstärkungskurve eines Verstärkers gleichmäßiger verstärkt werden und somit der Aussteuerungsbereich des Verstärkers optimal ausgenutzt werden kann. Bei einer Verstärkungskurve, die über die Frequenz nicht konstant ist, kann durch geeignete Wahl des Vorverstärkungsfaktors, die Gleichmäßigkeit der Verstärkung ebenfalls verbessert werden. Des weiteren ist der Vorverstärker VV als solches ein einfaches und kostengünstiges Element, da er lediglich im Frequenzbereich 470 MHz bis 860 MHz verstärken muß und der Verstärkungsfaktor sehr gering ist; z.B. haben die empfangenen breitbandigen Signale aus dem Übertragung netz NET2 bereits einen Signalpegel von 74 dB, so daß lediglich eine Verstärkung um zwei dB erzielt werden muß.

Die Frequenzweiche FW hat zwei Eingänge und einen Ausgang. Dem einen Eingang werden die empfangenen breitbandigen Signale aus Übertragungsnetz NET1 direkt, im optischen Fall nach der optisch/elektrischen Umsetzung, und dem anderen Eingang die empfangenen breitbandigen Signale aus Übertragungsnetz NET2 nach ihrer Signalpegelanpassung zugeführt. Die Frequenzweiche FW führt die beide Eingangssignale zusammen und anschließend über den Ausgang dem nachgeschalteten Breitbandverstärker BV zu. Das breitbandige Signal aus Übertragungsnetz NET2 belegt einen Frequenzbereich oberhalb einer vorgegebenen Grenzfrequenz, z.B. 470 MHz. Das breitbandige Signal aus Übertragungsnetz NET1 belegt einen Frequenzbereich unterhalb einer vorgegebenen Grenzfrequenz, z.B. 450 MHz. Die Frequenzweiche FW hat die Aufgabe die Übertragung von Störungen aus dem einen breitbandigen Signal in den belegten Frequenzbereich des anderen breitbandigen Signals und umgekehrt zu minimieren. Dazu sind ein Hochpaßfilter und ein Tiefpaßfilter vorgesehen. Das Hochpaßfilter hat eine Grenzfrequenz von 460 MHz, d.h. es leitet nur Signale weiter, die oberhalb der Grenzfrequenz liegen und sperrt Signale, die unterhalb der Grenzfrequenz liegen. Es ist dem Eingang der Frequenzweiche FW nachgeschaltet, an den das empfangene breitbandige Signal aus Übertragungsnetz NET2 anliegen. Damit wird erreicht, daß ein Störsignal im Signal aus Übertragungsnetz NET2, das frequenzmäßig unterhalb von 460 MHz liegt und bei der Zusammenführung der Signale aus beiden Übertragungnetzen NET1 und NET2 im Signal aus Übertragungsnetz NET1 das Signal-zu-Rausch-Verhältnis reduzieren würde, eliminiert wird. Das Tiefpaßfilter hat eine Grenzfrequenz von 460 MHz, d.h. es leitet nur Signale weiter, die unterhalb der Grenzfrequenz liegen und sperrt Signale, die oberhalb der Grenzfrequenz liegen. Es ist dem Eingang der Frequenzweiche FW nachgeschaltet, an den das empfangene breitbandige Signal aus Übertragungsnetz NET1 anliegen. Damit wird erreicht, daß ein Störsignal im Signal aus Übertragungsnetz NET1, das frequenzmäßig oberhalb von 460 MHz liegt und bei der Zusammenführung der Signale aus beiden Übertragungnetzen NET1 und NET2 im Signal aus Übertragungsnetz NET2 das Signal-zu-Rausch-Verhältnis reduzieren würde, eliminiert wird.

Im der Frequenzweiche FW sich anschließenden Breitbandverstärker BV werden die zusammengeführten breitbandigen Signale verstärkt und anschließend an eine Gruppe von Endstellen weitergeleitet. Der Breitbandverstärker BV ist geeignet Signale mindestens im Bereich von 80 MHz bis 860 MHz zu verstärken. Durch die Aufbereitung der Signale durch den Vorverstärker VV und die Frequenzweiche FW ist nun ein qualitativ minderwertiger und damit technisch weniger aufwendiger Breitbandverstärker BV ausreichend, um die Anforderungen hinsichtlich der nötigen Verstärkung zu erfüllen, im Vergleich zu dem Fall in dem keine Aufbereitung erfolgt, so daß mit dem gleichen Kostenaufwand eine höhere Qualität realisierbar ist oder bei gleicher Qualität eine Kostenersparnis auftritt.

Das zweite Ausführungsbeispiel wird nun unter Zuhilfenahme von Fig. 2 beschrieben. Fig. 2 zeigt eine erfindungsgemäße Vorrichtung VOR, die wie die Vorrichtung aus Fig. 1 einen Vorverstärker VV, eine Frequenzweiche FW und einen Breitbandverstärker BV beinhaltet. Diese Elemente entsprechen denjenigen aus Fig. 1 in ihrer Funktionsweise und ihrem Aufbau.

Die Vorrichtung aus Fig. 2 beinhaltet darüberhinaus einen zweiten Breitbandverstärker BV1, einen asymmetrischen Richtkoppler K1, zwei weitere Frequenzweichen FW1, FW2 und zwei Vertsärker V1, V2.

Der Breitbandverstärker BV1 ist dem Breitbandverstärker BV nachgeschaltet und dient dazu, den Signalpegel des Ausgangssignals des Breitbandverstärkers BV weiter zu ehöhen, damit das Signal über weite Entfernungen ohne weitere Verstärkung übertragbar ist. Dem Breitbandverstärker BV1 ist der asymmetrische Richtkoppler K1 nachgeschaltet, der dazu dient, den Großteil des Ausgangssignals des Breitbandverstärkers BV1 zu einer Gruppe von Endstellen weiterzuleiten, z.B. 80%, und einen geringen Teil, z.B. 20%, der Frequenzweiche FW2 zuzuführen.

Die Frequenzweiche FW2 hat zwei Eingänge und einen Ausgang und dient dazu, aus dem ihr zugeführten Teil des Ausgangssignals des Breitbandverstärkers BV zwei Signale mit unterschiedlichen, nicht überlappenden Frequenzbereichen zu generieren. Die Frequenzweiche FW2 beinhaltet dazu z.B. ein Hochpaßfilter und ein Tiefpaßfilter. Die Funktionsweise der Frequenzweiche FW2 ist vergleichbar der Funktionsweise der Frequenzweiche FW aus Fig. 1. Die Grenzfrequenzen des Hoch- und des Tiefpaßfilters sind einstellbar. So können sie beispielsweise zu 460 MHz gewählt werden und entsprechen damit den Grenzfrequenzen des Hoch- und des Tiefpaßfilters der Frequenzweiche FW aus Fig. 1. Dadurch wird erreicht, daß die empfangenen, zusammengeführten und verstärkten Signale wieder aufgeteilt werden und in den Verstärkern V1, V2 mit unterschiedlichen Verstärkungsfaktoren verstärkt werden können. So sind die Signale aus Übertragungsnetz NET1 beispielsweise analoge Signale, an die andere Anforderungen an die Signalpegel gestellt werden als an die, z.B. digitalen Signale aus Übertragungsnetz NET2. Die Grenzfrequenzen des Hoch- und des Tiefpaßfilters können aber auch derart gewählt werden, daß sie nicht mit den Grenzfrequenzen des Hoch- und des Tiefpaßfilters der Frequenzweiche FW aus Fig. 1 übereinstimmen. Wenn beispielsweise in Übertragungsnetz NET1 ausschließlich analoge Signale übertragen werden und in Übertragungsnetz NET2 sowohl analoge als auch digitale, so können durch geeignete Wahl der Grenzfrequenzen des Hoch- und des Tiefpaßfilters die analogen Signale der Ubertragungsnetze NET1 und NET2 und die digitalen Signale aus Übertragungsnetz NET2 separiert und getrennt verstärkt werden.

In den beiden Verstärkern V1, V2 werden die beiden in der Frequenzweiche FW2 generierten Signale getrennt voneinander und mit unterschiedlichen Verstärkungsfaktoren verstärkt. Der Aufbau der Verstärker V1, V2 ist technisch weniger aufwendig als der Aufbau des Breitbandverstärkers BV, da sie nur in einem Teilbereich des Frequenzbereichs verstärken müssen. Die Verstärker V1 und V2 sind somit kostengünstig herstellbar. Nach der Verstärkung werden die Signale einer weiteren Frequenzweiche FW1 mit zwei Eingängen und einem Ausgang zugeführt, in der die beiden, unterschiedlich verstärkten Signale zusammengeführt und anschließend an eine Gruppe von Endstellen weitergeleitet werden. Der Aufbau und die Funktionsweise der Frequenzweiche FW1 entspricht dem- und derjenigen aus der Frequenzweiche aus Fig. 1, wobei die Grenzfrequenzen des Hoch- und des Tiefpaßfilters denjenigen der Frequenzweiche FW2 entsprechen.

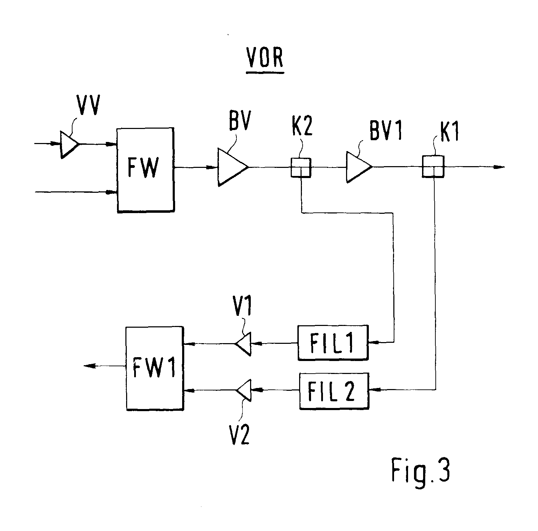

Das dritte Ausführungsbeispiel wird nun unter Zuhilfenahme von Fig. 3 beschrieben. Fig. 3 zeigt eine erfindungsgemäße Vorrichtung VOR, die in ihrer Funktionsweise und ihrem Aufbau der Vorrichtung aus Fig. 2 entspricht, mit der Ausnahme, daß anstelle der Frequenzweiche FW2 zwei Filter FIL1, FIL2 und ein zusätzlicher asymmetrischen Richtkoppler K2 vorgesehen sind.

Die zwei Filter FIL1, FIL2 sind jeweils einem Verstärker V1, V2 vorgeschaltet und dem Breitbandverstärker BV jeweils derart nachgeschaltet, daß mindestens ein Teil des Ausgangssignals des Breitbandverstärkers BV das jeweilige Filter FIL1, FIL2 erreicht.

Der asymmetrische Richtkoppler K2 ist zwischen Breitbandverstärker BV1 und Breitbandverstärker BV1 angeordnet und liefert Filter FIL1 einen Teil des Ausgangssignals des Breitbandverstärkers BV1. Das Filter FIL2 erhält sein Eingangssignal von Richtkoppler K1. Die Grenzfrequenzen der Filter FIL1 und FIL2, die beispielsweise ein Hochpaß- und ein Tiefpaßfilter oder zwei Bandpaßfilter sind, können frei gewählt werden, angepaßt an die Signalpegelanfoderungen, z.B. Aufteilung in analoge und digitale Signale wie zu Fig. 2 beschrieben. Die Grenzfrequenzen der Frequenzweiche FW1 sind dann an die Wahl der Grenzfrequenzen der Filter FIL1 und FIL2 angepaßt.

Bei den Ausführungsbeispielen können der Breitbandverstärker BV1 und die asymmetrischen Koppler K1 und K2 auch entfallen, wenn beispielsweise eine Weiterleitung nur an eine Gruppe von Endstellen erfolgen soll.

## Patentansprüche

1. Vorrichtung ( VOR ) zum Zusammenführen und Verstärken von zwei breitbandigen Signalen, die aus verschiedenen Übertragungsnetzen (NET1, NET2 ) empfangen werden und in frequenzmäßig voneinander getrennten Übertragungskanälen übertragen werden,
**dadurch gekennzeichnet,** daß ein Vorverstärker (VV) vorgesehen ist, um das eine empfangene breitbandige Signal derart zu verstärken, daß das Verhältnis des Signalpegels des einen empfangenen breitbandigen Signals zum Signalpegel des anderen empfangenen breitbandigen Signals einen vorgegebenen Wert einnimmt, daß eine Frequenzweiche ( FW) mit zwei Eingängen und einem Ausgang vorgesehen ist, um die beiden breitbandigen Signale zusammenzuführen und daß ein der Frequenzweiche nachgeschalteter Breitbandverstärker ( BV ) vorhanden ist, der geeignet ist, die zusammengeführten breitbandigen Signale zu verstärken.

2. Vorrichtung ( VOR ) nach Anspruch 1, dadurch gekennzeichnet, daß das eine breitbandige Signal einen Frequenzbereich oberhalb einer vorgegebenen Grenzfrequenz belegt, daß das andere breitbandige Signal einen Frequenzbereich unterhalb einer vorgegebenen Grenzfrequenz belegt und daß die Frequenzweiche ( FW ) ein Hochpaßfilter und ein Tiefpaßfilter beinhaltet, deren Grenzfrequenzen derart gewählt sind, daß die Übertragung von Störungen aus dem einen breitbandigen Signal in den belegten Frequenzbereich des anderen breitbandigen Signals und umgekehrt minimiert wird.

3. Vorrichtung ( VOR ) nach Anspruch 1 oder 2, dadurch gekennzeichnet, daß mindestens ein Mittel ( FW2, FIL1, FIL2 ) vorgesehen ist, um aus mindestens einem Teil des Ausgangssignals des Breitbandverstärkers ( BV ) zwei Signale mit unterschiedlichen, nicht überlappenden Frequenzbereichen zu generieren, daß zwei Verstärker ( V1, V2 ) vorgesehen sind, um die beiden generierten Signale getrennt voneinander und mit unterschiedlichen Verstärkungsfaktoren zu verstärken und daß eine weitere Frequenzweiche ( FW1 ) mit zwei Eingängen und einem Ausgang vorgesehen ist, um die beiden, unterschiedlich verstärkten Signale zusammenzuführen.

4. Vorrichtung ( VOR ) nach Anspruch 3, dadurch gekennzeichnet, daß das mindestens eine Mittel ( FW2, FIL1, FIL2 ) eine weitere Frequenzweiche ( FW2 ) mit einem Eingang und zwei Ausgängen ist, deren Ausgänge jeweils mit einem Verstärker ( V1, V2 ) verbunden sind und die dem Breitbandverstärker ( BV ) derart nachgeschaltet ist, daß mindestens ein Teil des Ausgangssignals des Breitbandverstärkers ( BV ) die Frequenzweiche ( FW2 ) erreicht.

5. Vorrichtung ( VOR ) nach Anspruch 3, dadurch gekennzeichnet, daß das mindestens eine Mittel ( FW2, FIL1, FIL2 ) aus zwei Filtern ( FIL1, FIL2 ) aufgebaut ist, die jeweils einem Verstärker (V1, V2 ) vorgeschaltet sind und die dem Breitbandverstärker ( BV) jeweils derart nachgeschaltet sind, daß mindestens ein Teil des Ausgangssignals des Breitbandverstärkers ( BV ) das jeweilige Filter ( FIL1, FIL2) erreicht.

6. Vorrichtung ( VOR ) nach Anspruch 3, 4 oder 5, dadurch gekennzeichnet, daß das mindestens eine Mittel ( FW2, FIL1, FIL2) geeignet ist, zwei Signale zu generieren, deren Frequenzbereiche sich von den Frequenzbereichen der Übertragungskanäle der empfangenen Signale unterscheiden.

7. Vorrichtung ( VOR ) nach einem der vorherigen Ansprüche, dadurch gekennzeichnet, daß das eine Übertragungnetz ( NET1 ) ein elektrisches und das andere ( NET2 ) ein optisches Netz ist.

8. Vorrichtung ( VOR ) nach Anspruch 7, dadurch gekennzeichnet, daß das eine elektrische Übertragungnetz ( NET1 ) ein Kabelfernsehverteilnetz ist.
